# EUROPEAN PATENT APPLICATION

(11) **EP 4 783 009 A1**
(43) Date of publication of application: **29.07.2026**
(21) Application number: 26150474.0
(22) Date of filing: 07.01.2026
(51) Int. Cl.: G06F 11/07, G06F 11/30

(54) **PROCESSING SYSTEM, RELATED DEVICE AND METHOD**

(30) Priority: 24.01.2025 IT 202500001320
(71) Applicant: STMicroelectronics International N.V., 1228 Plan-les-Ouates, Geneva (CH)
(72) Inventor: PERNICE, Mose' Alessandro, 95047 Paternò (CT) (IT); MARTORANA, Rosario, 95129 Catania (IT); COLOMBO, Roberto, 81829 Munich (DE)
(74) Representative: Buzzi, Notaro & Antonielli d'Oulx S.p.A.

(57) **Abstract**

The present disclosure relates to a processing system (10a) comprising a safety monitor circuit (SM; SM_{TH}) configured to generate an error signal (ERR) by monitoring the operation of the processing system (10a). The processing system (10a) comprises also a non-volatile memory (104) configured to store a count value, a hardware safety-time monitor circuit (30) configured to generate a further error signal (ERR_{T}) as a function of the error signal (ERR), and a fault collection and error management circuit (120) configured to generate one or more reaction signals (IR; ER) as a function of the further error signal (ERR_{T}). The hardware safety-time monitor circuit comprises a counter (302) configured to selectively increase a count value. Specifically, in response to switching on the processing system (10a), the hardware safety-time monitor circuit (30) transfers the stored count value from the non-volatile memory (104) to the counter (302). Moreover, the hardware safety-time monitor circuit (30) determines whether the error signal (ERR) is asserted. In response to determining that the error signal (ERR) is asserted, the hardware safety-time monitor circuit (30) increases via the counter (302) the count value. Moreover, the hardware safety-time monitor circuit (30) determines whether the count value reaches or exceeds a maximum value (CM). In response to determining that the count value reaches or exceeds the maximum value (CM), the hardware safety-time monitor circuit (30) asserts the further error signal (ERR_{T}). Moreover, in response to determining a switching off of the processing system (10a) and/or periodically, the hardware safety-time monitor circuit (30) transfers the count value from the counter (302) to the non-volatile memory (104), whereby the count value is a cumulative count value.

## Description

### Technical Field

Embodiments of the present disclosure relate to the error management within processing systems, such as micro-controllers.

### Background

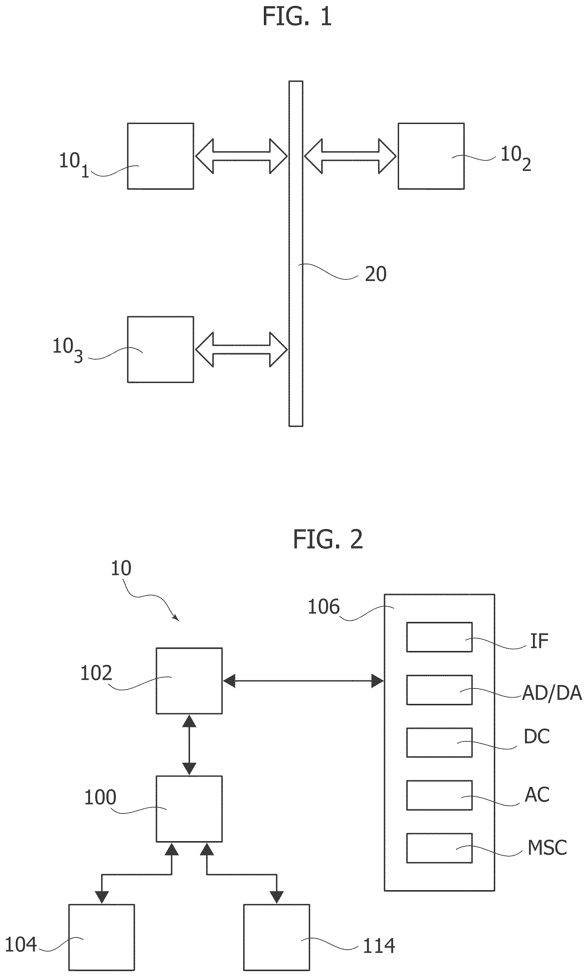

Figure 1 shows a typical electronic system, such as the electronic system of a vehicle, comprising a plurality of processing systems 10, such as embedded systems or integrated circuits, e.g., a Field Programmable Gate Array (FPGA), a Digital Signal Processor (DSP) or a micro-controller (e.g., dedicated to the automotive market).

For example, in Figure 1 are shown three processing systems 10₁, 10₂ and 10₃ connected through a suitable communication system 20. For example, the communication system may include a vehicle control bus, such as a Controller Area Network (CAN) bus, and possibly a multimedia bus, such as a Media Oriented Systems Transport (MOST) bus, connected to vehicle control bus via a gateway. Typically, the processing systems 10 are located at different positions of the vehicle and may include, e.g., an Engine Control Unit, a Transmission Control Unit (TCU), an Anti-lock Braking System (ABS), a Body Control Module (BCM), and/or a navigation and/or multimedia audio system. Accordingly, one or more of the processing systems 10 may also implement real-time control and regulation functions. These processing systems are usually identified as Electronic Control Units.

Figure 2 shows a block diagram of an exemplary digital processing system 10, such as a micro-controller, which may be used as any of the processing systems 10 of Figure 1.

In the example considered, the processing system 10 comprises a microprocessor 102, usually the Central Processing Unit (CPU), programmed via software instructions. Usually, the software executed by the microprocessor 102 is stored in a non-volatile program memory 104, such as a Flash memory or EEPROM. Thus, the memory 104 is configured to store the firmware of the processing unit 102, wherein the firmware includes the software instructions to be executed by the microprocessor 102. Generally, the non-volatile memory 104 may also be used to store other data, such as configuration data, e.g., calibration data.

The microprocessor 102 usually has associated also a volatile memory 104b, such as a Random-Access-Memory (RAM). For example, the memory 104b may be used to store temporary data.

As shown in Figure 2, usually the communication with the memories 104 and/or 104b is performed via one or more memory controllers 100. The memory controller(s) 100 may be integrated in the microprocessor 102 or connected to the microprocessor 102 via a communication channel, such as a system bus of the processing system 10. Similarly, the memories 104 and/or 104b may be integrated with the microprocessor 102 in a single integrated circuit, or the memories 104 and/or 104b may be in the form of a separate integrated circuit and connected to the microprocessor 102, e.g., via the traces of a printed circuit board.

In the example considered, the microprocessor 102 may have associated one or more (hardware) resources/peripherals 106 selected from the group of:
- one or more communication interfaces IF, e.g., for exchanging data via the communication system 20, such as a Universal asynchronous receiver/transmitter (UART), Serial Peripheral Interface Bus (SPI), Inter-Integrated Circuit (I²C), Controller Area Network (CAN) bus, and/or Ethernet interface, and/or a debug interface; and/or
- one or more analog-to-digital converters AD and/or digital-to-analog converters DA; and/or
- one or more dedicated digital components DC, such as hardware timers and/or counters, or a cryptographic co-processor; and/or
- one or more analog components AC, such as comparators, sensors, such as a temperature sensor, etc.; and/or
- one or more mixed signal components MSC, such as a PWM (Pulse-Width Modulation) driver.

Generally, a dedicated digital component DC may also correspond to a FPGA integrated in the processing system 10. For example, in this case, the memory 104 may also comprise the program data for such a FPGA.

Accordingly, the digital processing system 10 may support different functionalities. For example, the behavior of the microprocessor 102 is determined by the firmware stored in the memory 104, e.g., the software instructions to be executed by a microprocessor 102 of a micro-controller 10. Thus, by installing a different firmware, the same hardware (micro-controller) can be used for different applications.

In this respect, future generations of such processing systems 10, *e.g.*, micro-controllers adapted to be used in automotive applications, are expected to exhibit an increase in complexity, mainly due to the increasing number of requested functionalities (new protocols, new features, etc.) and to the tight constraints of execution conditions (e.g., lower power consumption, increased calculation power and speed, etc.).

For example, recently more complex multi-core processing systems 10 have been proposed. For example, such multi-core processing systems may be used to execute (in parallel) several of the processing systems 10 shown in Figure 1, such as several ECUs of a vehicle.

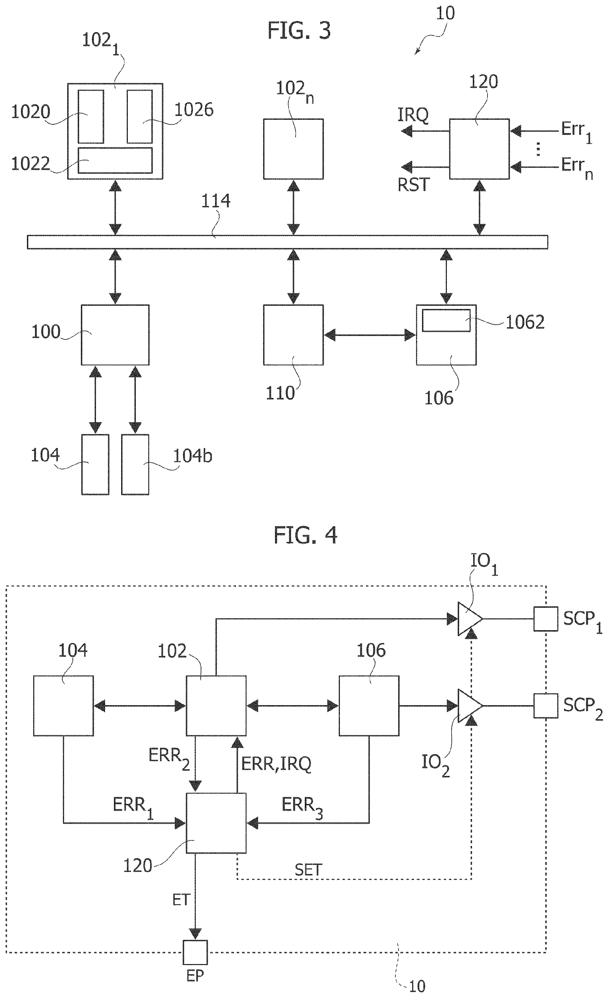

Figure 3 shows an example of a multi-core processing system 10. Specifically, in the example considered, the processing system 10 comprises a plurality of n processing cores 102₁...102ₙ connected to a (on-chip) communication system 114. For example, in the context of real-time control systems, the processing cores 102₁...102ₙ may be ARM Cortex^{®}-R52 cores. Generally, the communication system 114 may comprise one or more bus systems, e.g., based on the Advanced eXtensible Interface (AXI) bus architecture, and/or a Network-on-Chip (NoC).

For example, as shown at the example of the processing core 102₁, each processing core 102 may comprise a microprocessor 1020 and a communication interface 1022 configured to manage the communication between the microprocessor 1020 and the communication system 114. Typically, the interface 1022 is a master interface configured to forward a given (read or write) request from the microprocessor 1020 to the communication system 114, and forward an optional response from the communication system 114 to the microprocessor 1020. However, the communication interface 1022 may also comprise a slave interface. For example, in this way, a first microprocessor 1020 may send a request to a second microprocessor 1020 (via the communication interface 1022 of the first microprocessor, the communication system 114 and the communication interface 1022 of the second microprocessor).

Generally, each processing core 102₁...102ₙ may also comprise further local resources, such as one or more local memories 1026, usually identified as Tightly Coupled Memory (TCM).

As mentioned before, typically the processing cores 102₁...102ₙ are arranged to exchange data with a non-volatile memory 104 and/or a volatile memory 104b. In a multi-core processing system 10, often these memories are system memories, *i.e.,* shared for the processing cores 102₁...102ₙ. As mentioned before, each processing core 102₁...102ₙ may, however, comprise one or more additional local memories 1026.

For example, as shown in Figure 3, the processing system 10 may comprise one or more memory controllers 100 configured to connect at least one non-volatile memory 104 and at least one volatile memory 104b to the communication system 114. As mentioned before, one or more of the memories 104 and/or 104b may be integrated in the integrated circuit of the processing system 10 or connected externally to the integrated circuit.

As mentioned before, the processing system 10 may comprise one or more resources 106, such as one or more communication interfaces or co-processors (e.g., a cryptographic co-processor). The resources 106 are usually connected to the communication system 114 via a respective communication interface 1062. In general, the communication interface 1062 comprises at least a slave interface. For example, in this way, a processing core 102 may send a request to a resource 106 and the resource returns given data. Generally, one or more of the communication interfaces 1062 may also comprise a respective master interface. For example, such a master interface may be useful in case the resource has to start a communication in order to exchange data via (read and/or write) request with another circuit connected to the communication system 114, such as a resource 106 or a processing core 102. For example, for this purpose, the communication system 114 may indeed comprise an Advanced Microcontroller Bus Architecture (AMBA) High-performance Bus (AHB), and an Advanced Peripheral Bus (APB) used to connect the resources/peripherals 106 to the AMBA AHB bus.

Often such processing systems 10 comprise also one or more Direct Memory Access (DMA) controllers 110. For example, as shown in Figure 3, a DMA controller 110 may be used to directly exchange data with a memory, e.g., the memory 104b, based on requests received from a resource 106. For example, in this way, a communication interface IF may directly read data (via the DMA controller 110) from the memory 104b and transmit these data, without having to exchange further data with a processing unit 102. Generally, a DMA controller 110 may communicate with the memory or memories via the communication system 114 or via one or more dedicated communication channels.

In this respect, irrespective of the complexity of the processing system 10 (*e.g.*, with respect to the number of processing cores 102 and/or number and type of the resources 106), a typical processing system 10 comprises also a fault collection and error management circuit 120.

For example, European patent application n. EP 3 534 261 A1 discloses possible embodiments of a fault collection and error management circuit 120, which is incorporated herein by reference for this purpose.

Specifically, as shown in Figure 4, at least one of the circuits 102, 104 and 106 may generate one or more error signals ERR₁, ..., ERRₘ. For example, such error signals ERR may be generated by at least one of:
- a memory 104 supporting an error detection and optional correction function, which generates an error signal ERR₁ when the data read from the memory 104 contain errors and/or when data could not be written to the memory;
- a processing core 102 configured to generate an error signal ERR₂ in response to a hardware and/or software failure; and
- a communication interface configured to generate an error signal ERR₃, corresponding to a hard error signal indicative of a hardware failure and/or a soft error signal indicative of a data transmission error.

In the example considered, the various error signals ERR₁, ..., ERRₘ are provided to the fault collection and error management circuit 120. In response to the error signals ERR₁, ..., ERRₘ, the fault collection and error management circuit 120 may execute various operations.

For example, the fault collection and error management circuit 120 may be configured to generate at least one of:
- an interrupt signal IRQ provided to a processing core 102;
- a reset request signal RST provided to a reset management circuit of the processing system 10;
- a signal ET provided to a terminal EP of the processing system 10, *e.g.*, in order to signal the error to an external circuit; and
- a signal SET used to set the output level of one or more safety critical terminals SCP of the processing system 10.

Specifically, due to an error, the circuits of the processing system 10 may not operate correctly, possibly generating incorrect signals at the pins/pads of the processing system 10. Some of the pins/pads of the processing system 10a may thus be safety-critical pins/pad, *i.e.,* pins/pads which may generate critical situations when driven incorrectly. For example, in Figure 4 is shown schematically a first safety-critical pin SCP₁, which is driven by a processing core 102, and a second safety-critical pin SCP₂, which is driven by a resource/peripheral 106, such as a communication interface or a PWM half-bridge driver.

Generally, each input/output pin/pad of the processing system 10 has usually associated a respective driver circuit IO, which is configured to drive the respective pin/pad as a function of the signal received from the respective block, *e.g.*, the processing system 102 and the hardware resources 106. Generally, between the driver circuits IO and the blocks of the processing system 10a may also be arranged a dedicated logic, such as one or more multiplexers, permitting a configuration of the pin-mapping.

Accordingly, in line with the disclosure of document EP 3 534 261 A1, the driver circuit IO of a safety-critical pins/pads SCP may be configured to set the output level of the respective pin to a given safety state in response to a signal SET. The output level, such as a high-impedance state or a given logic level (high or low), may depend on the specific application needs. Preferably such a "safety state" is compliant to the ISO 26262 specification.

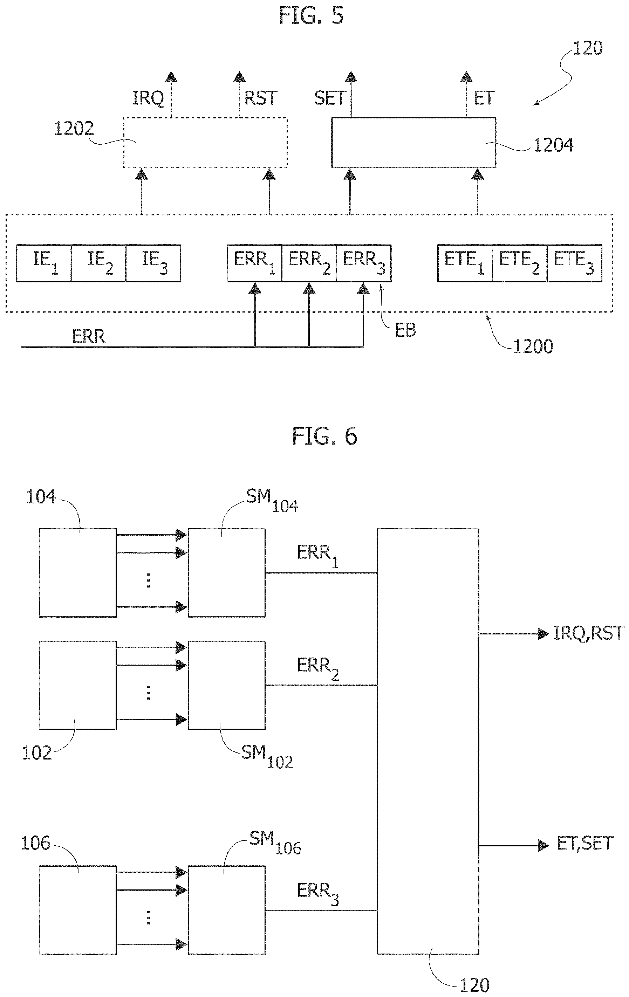

Figure 5 shows a possible implementation of the fault collection and error management circuit 120.

In the example considered, the fault collection and error management circuit 120 comprises a register 1200. Specifically, in the example considered, the register 1200 comprises one or more error bits EB for storing the value of the error signals ERR. For example, considering the exemplary case of three error signals ERR₁..ERR₃, the register 1200 may comprise a corresponding number of error bits EB.

In the example considered, the fault collection and error management circuit 120 comprises an internal reaction circuit 1202. Specifically, the internal reaction circuit 1202 may be configured to generate the interrupt signal IRQ and/or the reset request signal RST as a function of the content of the error bits EB of the register 1200. The error bits EB are purely optional and the internal reaction circuit 1202 may generate the interrupt signal IRQ and/or the reset request signal RST also directly as a function of the error signal(s) ERR.

Similarly, the fault collection and error management circuit 120 comprises an external reaction circuit 1204. Specifically, the external reaction circuit 1204 may be configured to generate the error trigger signal ET and/or the signal SET as a function of the content of the error bits EB of the register 1200. Again, the error bits EB are purely optional and the external reaction circuit 1204 may generate the signal ET and/or the signal SET also directly as a function of the error signal(s) ERR.

In general, the behavior of the reaction circuits 1202 and/or 1204 may also be programmable, e.g., by setting one or more configuration bits in the register 1200. For example, in the example considered, the register 1200 comprises:
- a respective interrupt enable bit IE for each of the error signals ERR₁..ERR₃, *i.e.,* the interrupt signal IRQ is asserted when also the respective interrupt enable bit IE of an asserted error signal ERR is asserted;
- a respective error trigger enable bit ETE for each of the error signals ERR₁..ERR₃, *i.e.,* the error trigger signal ET is asserted when also the respective error trigger enable bit ETE of an asserted error signal ERR is asserted.

Similarly, the register 1200 may comprise respective reset enable bits for the reset request signal REQ and/or respective enable bits for the safety signal SET.

In order to simplify the data exchange between the processing unit 102 and the registers 1200, the register 1200 may be directly addressable by the processing unit 102, which is schematically shown in Figure 3, where the fault collection and error management circuit 120 is connected to the communication system 114.

Typically, as shown in Figure 6, the hardware error signals ERR are generated by dedicated safety monitor circuits SM. For example, such safety monitor circuits may comprise combinational and/or sequential logic circuits, which monitor the operation of a given circuit. Generally, such safety monitor circuits SM may also comprise analog components, e.g., in order to detect an out-of-range condition for an analog signal, such as an internal supply voltage or a signal indicative of the operating temperature of the processing system or a specific circuit of the processing system.

For example, Figure 6 shows a safety monitor circuit SM₁₀₄ configured to monitor one or more signals of the memory 104, a safety monitor circuit SM₁₀₂ configured to monitor one or more signals of a processing core 102 and a safety monitor circuit SM₁₀₆ configured to monitor one or more signals of a resource/peripheral 106. Generally, the safety monitor circuit may also be integrated in the respective circuit.

Accordingly, typically each safety monitor circuit SM monitors one or more signals generated by and/or provided to the associated circuit, and determines whether the behavior of the signal(s) is normal or indicates an error. In general, the operations performed by a given safety monitor circuit SM depend on the associated circuit and may include, e.g.:
- a combinational analysis, e.g., by combining the signals of the associated circuit in order to determine whether the signal levels are congruent;
- a sequential analysis, e.g., by comparing the time evolution of one or more signals with one or more reference signals;
- an analysis of one or more analog signals, e.g., by comparing the value of an analog signal with one or more reference values; or
- a combination of the above analyses in order to implement a more complex abnormal behavior analysis.

For example, the safety monitor circuit SM₁₀₄ may comprise an error detection circuit of the memory 104, which calculates (via combinational and optionally sequential logic operations) an error correction code for the data read from the memory and compares (via combinational logic operations) the calculated error correction code with an error correction code read from the memory.

Accordingly, in response to determining an abnormal behavior, the safety monitor circuit SM may assert a respective error signal ERR, which signals the error to the fault collection system 120.

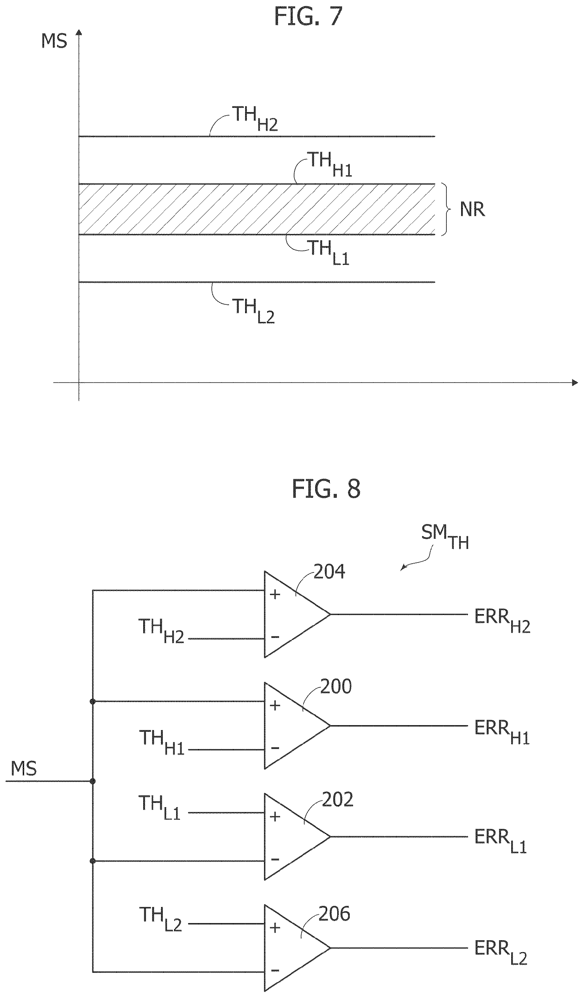

For example, Figure 7 shows the operation of a typical safety monitor circuit SM configured to monitor an analog or digital measurement signal MS. For example, the signal MS may be indicative of (e.g., proportional to) a voltage, a current, an electric power or a temperature. For example, a safety monitor circuit SM may monitor a measurement signal MS indicative of a supply voltage received by the processing system 10 or generated within the processing system 10. Additionally or alternatively, a safety monitor circuit SM may monitor a measurement signal MS indicative of voltage, current or power provided by the processing system 10. Additionally or alternatively, a safety monitor circuit SM may monitor a measurement signal MS indicative the temperature of the processing system 10 or a component of the processing system 10. In general, the (analog or digital) sensor configured to provide the measurement signal MS may be internal or external with respect to the integrated circuit of the processing system 10.

For example, in a usual processing system, the safety monitor circuit SM is configured to compare the measurement signal MS with one or more thresholds. For example, usually, the safety monitor circuit SM is configured to determine whether the measurement signal MS exceeds a given upper threshold TH_{H1}. For example, in this way may be detected an over-voltage, over-current, over-power or over-temperature condition, respectively.

Additionally or alternatively, the safety monitor circuit SM may determine whether the measurement signal MS falls below a given lower threshold TH_{L1}, wherein the lower threshold TH_{L1} is smaller than the upper threshold TH_{H1}. For example, in this way may be detected an under-voltage, under-current, under-power or under-temperature condition, respectively.

For example, by using the upper threshold TH_{H1} and the lower threshold TH_{L1}, the safety monitor circuit SM may determine whether the processing system is in a normal operating range NR.

As shown in Figure 7, instead of using a single upper and/or lower threshold, the safety monitor circuit SM may also compare the measurement signal MS with a plurality of upper thresholds, e.g., threshold TH_{H1} and TH_{H2}, and/or a plurality of lower thresholds, e.g., threshold TH_{L1} and TH_{L2}, wherein the threshold TH_{H2} is greater than the threshold TH_{H1}, and the threshold TH_{L2} is smaller than the threshold TH_{L1}.

For example, Figure 8 shows a safety monitor circuit SM_{TH} comprising one or more comparators configured to assert a respective error signal ERR in response to determining that the measurement signal MS crosses a respective threshold (i.e., exceeds an upper threshold or falls below a lower threshold).

For example, with respect to the thresholds show in Figure 7, the safety monitor circuit SM_{TH} comprises a comparator 200 configured to assert an error signals ERR_{H1} in response to determining that the measurement signal MS is greater the thresholds TH_{H1} and/or a comparator 202 configured to assert an error signals ERR_{L1} in response to determining that the measurement signal MS is smaller than the thresholds TH_{L1}. Optionally, the safety monitor circuit SM_{TH} may comprise a comparator 204 configured to assert an error signals ERR_{H2} in response to determining that the measurement signal MS is greater the thresholds TH_{H2} and/or a comparator 206 configured to assert an error signals ERR_{L2} in response to determining that the measurement signal MS is smaller than the thresholds TH_{L2}. In general, based on whether the measurement signal MS is an analog or digital signal, also the comparators 200 to 206 may be analog or digital comparators. Moreover, the comparators 200 to 206 may be comparators with hysteresis.

In turn the fault collection and error management circuit 120 may be configured to generate one or more internal and/or external reactions as a function of the error signal(s) received from the safety monitor circuit SM_{TH}. For example, in response to determining that an error signal ERR_{H1} or ERR_{L1} changes from de-asserted to asserted, e.g., in response to a rising edge of the error signal ERR_{H1} or ERR_{L1}, the fault collection and error management circuit 120 may assert an interrupt signal IRQ for the processing circuit 102. For example, in response to the interrupt IRQ, the processing circuit 102 may change one or more operating conditions of the processing system 10. Conversely, in response to determining that an error signal ERR_{H2} or ERR_{L2} changes from de-asserted to asserted, e.g., in response to a rising edge of the error signal ERR_{H2} or ERR_{L2}, the fault collection and error management circuit 120 may assert one or more safety signals SET, e.g., in order to switch off one or more safety-critical pins/pads SCP. Alternatively, the fault collection and error management circuit 120 may generate a reset request signal RST in order to reset the processing system 10, or switch off the processing system 10. For example, when the supply voltage or the temperature of the processing system 10 crosses the threshold TH_{H2} or TH_{L2}, the processing system 10 should be switched off, because the processing system 10 may be in an unstable working condition.

Documents US 2022/334865 A1, US 7 386 767 B1, US 2016/248242 A1, US 2019/179693 A1 and JP 5 143259 B2 may also be of interest for the present invention.

### Summary

In view of the above, it is an objective of various embodiments of the present disclosure to provide improved solutions for monitoring error conditions via safety monitor circuits comprising one or more comparators.

According to one or more embodiments, one or more of the above objectives is achieved by means of a processing system having the features specifically set forth in the claims that follow. Embodiments moreover concern a related device and method.

The scope of protection is defined in the enclosed claims, which are an integral part of the technical teaching of the disclosure provided herein.

As mentioned before, various embodiments of the present disclosure relate to a processing system, e.g., integrated in an integrated circuit, such as a microcontroller, comprising a safety monitor circuit configured to generate an error signal by monitoring the operation of the processing system. For example, in various embodiments, the safety monitor circuit is configured to generate the error signal by determining whether a measurement signal indicative of a supply voltage or temperature of the processing system exceeds a given threshold. For example, the safety monitor circuit may comprise a first comparator configured to assert a first error signal in response to determining that the measurement signal exceeds a first threshold and a second comparator configured to assert a second error signal in response to determining that the measurement signal exceeds a second threshold.

Specifically, in various embodiments, the processing system comprises also a non-volatile memory configured to store a count value, a hardware safety-time monitor circuit configured to generate a further error signal as a function of the error signal, and a fault collection and error management circuit configured to generate one or more reaction signals as a function of the further error signal and optionally the error signal. In various embodiments, the hardware safety-time monitor circuit comprises a counter configured to selectively increase a count value.

Specifically, in various embodiments, in response to switching on the processing system, the hardware safety-time monitor circuit transfers the stored count value from the non-volatile memory to the counter. Moreover, the hardware safety-time monitor circuit determines whether the error signal is asserted. In response to determining that the error signal is asserted, the hardware safety-time monitor circuit increases via the counter the count value. Moreover, the hardware safety-time monitor circuit determines whether the count value reaches or exceeds a maximum value and, in response to determining that the count value reaches or exceeds the maximum value, the hardware safety-time monitor circuit asserts the further error signal.

In this respect, when using the first error signal and the second error signal, the hardware safety-time monitor circuit may comprise a first counter configured to selectively increase a first count value count value and a second counter configured to selectively increase a second count value count value. In this case, the hardware safety-time monitor circuit may be configured to, in response to determining that the first error signal is asserted, increase via the first counter the first count value, determine whether the first count value reaches or exceeds a first maximum value and, in response to determining that the first count value reaches or exceeds the first maximum value, assert a first further error signal. Similarly, the hardware safety-time monitor circuit may be configured to, in response to determining that the second error signal is asserted, increase via the second counter the second count value, determine whether the second count value reaches or exceeds a second maximum value and, in response to determining that the second count value reaches or exceeds the second maximum value, assert a second further error signal. Accordingly, in this case, the fault collection and error management circuit may be configured to generate the one or more reaction signals as a function of the first further error signal and the second further error signal.

In various embodiments, in response to determining a switching off of the processing system and/or periodically, the hardware safety-time monitor circuit transfers the count value from the counter to the non-volatile memory, whereby the count value is a cumulative count value. For example, in various embodiments, the processing system comprises a comparator configured to determine whether a supply voltage of the processing system is smaller than a lower threshold and, in response to determining that the supply voltage of the processing system is smaller than the lower threshold, assert an under-voltage error signal. In this case, the hardware safety-time monitor circuit may be configured to determine the switching off of the processing system by determining whether the under-voltage error signal is asserted.

In various embodiments, the processing system comprises also a microprocessor, a memory controller configured to interface the non-volatile memory and a communication system connecting the memory controller to the microprocessor. For example, in this way, the fault collection and error management circuit may be configured to generate an interrupt of the microprocessor in response to the error signal, wherein the microprocessor is configured to, in response to the interrupt, execute software instructions in order to change the operation of the processing system in order to avoid an error condition associated with the error signal. Moreover, the fault collection and error management circuit may be configured to, in response to the further error signal, generate a reaction signal used to place the processing system in a safe state.

In this case, the hardware safety-time monitor circuit may also comprise one or more configuration registers configured to store the maximum value, and a slave communication interface configured to program the one or more configuration registers in response to receiving a write request from the communication system.

Moreover, in various embodiments, the processing system, e.g., the hardware safety-time monitor circuit, comprises a DMA interface configured to transfer the stored count value from the non-volatile memory to the counter, and the count value from the counter to the non-volatile memory. For example, the DMA interface may be a master communication interface configured to transfer the stored count value from the non-volatile memory to the counter by sending read requests to the communication system, and transfer the count value from the counter to the non-volatile memory by sending write requests to the communication system.

### Brief description of the figures

Embodiments of the present disclosure will now be described with reference to the annexed drawings, which are provided purely by way of non-limiting example and in which:
- Figure 1 shows an example of an electronic system comprising a plurality of processing systems;
- Figures 2 and 3 show examples of processing systems;
- Figure 4 shows an example of a processing system comprising a fault collection and error management circuit;
- Figure 5 shows an example of the fault collection and error management circuit of Figure 4;
- Figure 6 shows an example of the connection between a plurality of safety monitor circuits and the fault collection and error management circuit;
- Figures 7 and 8 show an example of a safety monitor circuit comprising one or more comparators;
- Figure 9 shows an embodiment of a processing system according to the present disclosure;
- Figure 10 shows an embodiment of a safety-time monitor circuit for the processing system of Figure 9; and
- Figure 11 shows a state diagram illustrating an embodiment of the operation of a state control circuit of the safety-time monitor circuit of Figure 10.

### Detailed Description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The references provided herein are for convenience only and do not interpret the scope or meaning of the embodiments.

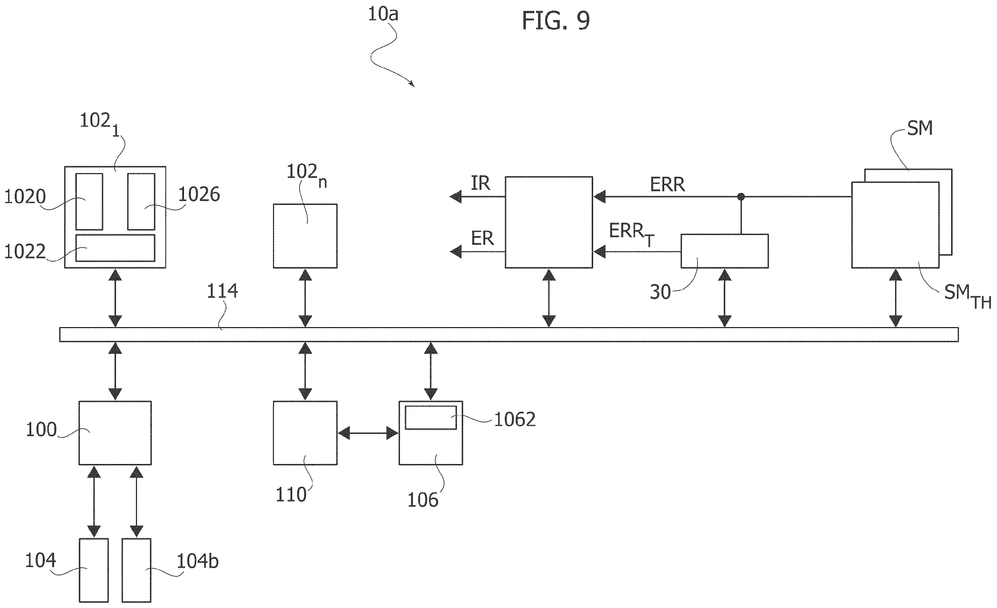

In the following Figures 9 to 11 parts, elements or components which have already been described with reference to Figures 1 to 8 are denoted by the same references previously used in such Figure; the description of such previously described elements will not be repeated in the following in order not to overburden the present detailed description.

As mentioned before various embodiments of the present disclosure relate to solutions for monitoring error conditions via safety monitor circuits, e.g., safety monitor circuits comprising one or more comparators. Such solutions may be used in a processing system as described in the foregoing.

For example, Figure 9 shows an embodiment of a processing system 10a according to the present disclosure. Specifically, the processing system 10a comprises one or more processing cores 102, such as processing cores 102₁ to 102ₙ. For example, each processing core 102 may comprise one or more microprocessors 102. The processing system 10a comprises also one or more memory controllers 100 configured to interface one or more internal and/or external non-volatile memories 104 and/or volatile memories 104b. The one or more memory controllers 100 are connected to the one or more processing cores 102 via a suitable communication system 114, such as one or more system buses and/or a NoC. For example, a non-volatile memory 104 may be configured to store the software instructions to be executed by the microprocessor(s) 1020.

In various embodiments, the processing system 10a comprises also further circuits, such as one or more resources/peripherals 106 and/or general-purpose DMA controllers 110, which are connected to the communication system 114. Reference is made to the description of the Figures 1 to 3 for possible embodiments of the circuits 100 to 114, which applies in its entirety.

In various embodiments, the processing system 10a comprises also a fault collection and error management circuit 120 and one or more safety monitor circuits SM. For example, each safety monitor circuit SM may be configured to generate a respective error signal ERR by monitoring the operation of a respective circuit, such as the circuits 100 to 114. Conversely, the fault collection and error management circuit 120 is configured to generate one or more internal reaction signals IR, such as an interrupt signal IRQ and/or a reset request signal RST, and/or one or more external reaction signals ER, such as a signal ET provided to a terminal EP of the processing system 10a and/or a signal SET used to set the output level of one or more safety critical terminals SCP of the processing system 10a. In various embodiments, the mapping of the error signals ERR to the internal reaction signals IR and/or external reaction signals ER may be programmable. Reference is made to the description of the Figures 4 to 6 for possible embodiments of the circuits 120 and SM, which applies in its entirety.

In various embodiments, at least one of the safety monitor circuit SM corresponds to a safety monitor circuit SM_{TH} configured to generate an error signal ERR indicating whether a measurement signal MS is above or below one or more threshold values. Reference is made to the description of the Figures 7 and 8 for possible embodiments of the circuit SM_{TH}, which applies in its entirety.

For example, in this way, the fault collection and error management circuit 120 may be configured to generate an internal reaction signal IR and/or an external reaction signal ER in response to determining that an error signal ERR indicates that the measurement MS exceeds an upper threshold, e.g., error signal ERR_{H1} for the threshold TH_{H1} and optionally error signal ERR_{H2} for the threshold TH_{H2}, or falls below a lower threshold, e.g., error signal ERR_{L1} for the threshold TH_{L1} and optionally error signal ERR_{L2} for the threshold TH_{L2} (see also the description of Figures 7 and 8).

In this respect, the inventors have observed that modern processing systems usually have prescribed operating ranges for the supply voltage VDD of the processing system 10a and the temperature of the processing system 10a. Accordingly, in various embodiments, a first safety monitor circuit SM_{TH} may be configured to compare the supply voltage VDD of the processing system 10a with respective thresholds, and/or a second safety monitor circuit SM_{TH} may be configured to compare the temperature of the processing system 10a with respective thresholds.

However, the inventors have observed that such processing systems 10a may usually also be operated for brief periods outside the normal operating range. For example, with respect to the supply voltage VDD, the processing system 10a may usually be operated with a supply voltage between the lower threshold TH_{L1} and the upper threshold TH_{H1}. Conversely, the processing system 10a may be operated with a supply voltage between the upper threshold TH_{H1} and the upper threshold TH_{H2} for a given first maximum time period, such as 10 hours, and above the upper threshold TH_{H2} (or between and the upper threshold TH_{H2} and a further upper threshold TH_{H3}) just for a given (lower) second maximum time period, such as 60 seconds. For example, in various embodiments, the upper threshold TH_{H1} may be 1.00 V, the upper threshold TH_{H2} may be 1.08 V, and the optional further upper threshold TH_{H3} may be 1.15 V.

Similarly, with respect to the temperature, the processing system 10a may usually be operated with a temperature between the respective lower threshold TH_{L1} and the respective upper threshold TH_{H1}. Conversely, the processing system 10a may be operated with a temperature between the respective upper threshold TH_{H1} and the upper respective threshold TH_{H2} for a given first maximum time period, and above the respective upper threshold TH_{H2} (or between and the respective upper threshold TH_{H2} and a respective further upper threshold TH_{H3}) just for a given second maximum time period.

Accordingly, in various embodiments, in response to the error signal ERR provided by a the safety monitor circuit SM, in particular a safety monitor circuit SM_{TH}, the fault collector and error management circuit 120 is configured to generate an interrupt IRQ for a processing core 102, and the respective microprocessor 1020 is configured (via software instructions) to monitor the time of the error condition and possibly shut-down the processing system 10a when the time reaches the respective threshold value.

However, as mentioned before, often the time limits are not dynamic limits, wherein the time should be restarted each time the respective threshold is exceeded, but represents a permanent limit, e.g., because the processing system 10a may become unstable after such a time limit is exceeded during the whole life-time of the processing system 10a. Accordingly, in order to manage such permanent timing functions, the software executed by the microprocessor 1020 may be configured to store the timer value to a non-volatile memory 104 in response to given events, and load the previous timer value from the non-volatile memory 104 at a next start-up (or reset) of the processing system 10a.

While such a software-based solution is functional, it exhibits several significant limitations that affect its overall reliability, complexity, and resource efficiency.

First of all, one of the primary challenges with the software-based solution lies in its operational reliability. In fact, once an error is signaled by a safety monitor circuit SM_{TH}, the software operates in conditions that are already close to the system's guaranteed functional limits. In such borderline situations, there is an increased likelihood of errors or failures, as the system may struggle to maintain consistent performance under varying conditions, such as temperature or supply voltage. As a result, the trustworthiness of the solution is diminished.

Moreover, when using a shared CPU implementation, the error management software is executed on an existing CPU that is already handling other system functions. However, this reduces the available bandwidth for other critical applications running on the CPU, potentially affecting the overall system performance. Moreover, the additional processing load increases the complexity of the software, as the system must efficiently manage task prioritization and resource allocation to avoid bottlenecks or delays. These challenges can lead to suboptimal performance and increased risk of system instability.

The above problems could be solved by using a separate CPU, e.g., supporting a wider normal operating range, which is allocated exclusively to the monitoring and management of error conditions. While this isolates the functionality and reduces the interference with other system processes, it comes at the cost of additional silicon area. The increased silicon usage not only raises manufacturing costs but also consumes more power and may require a redesign of the hardware architecture to accommodate the extra processing unit.

In any case, software-based solutions are inherently complex to design and implement. This complexity arises from the need to ensure precise timing, accurate detection of error conditions, and seamless integration with the system's interrupt-driven mechanisms. Additionally, the software must handle various edge cases, such as overlapping events or unexpected conditions, which further complicates its development. The complexity also increases the risk of bugs, longer development timelines, and higher maintenance costs, making the solution less efficient in terms of both development and operational overhead.

Thus, in various embodiments, a hardware-based solution is used to monitor the time limits for the error condition(s) signaled by a safety monitor circuit SM, such as a safety monitor circuit SM_{TH}. In fact, hardware implementations can provide greater reliability, lower complexity, and improved resource efficiency. This is also shown in Figure 9, wherein the processing system 10a comprises a safety-time monitor circuit 30 configured to receive one or more of the error signals ERR provided by one or more safety monitor circuits SM, such as one or more safety monitor circuits SM_{TH}. In response to determining that an error signal ERR signals an error condition, e.g., because the respective measurement signal MS exceeds a respective threshold, the safety-time monitor circuit 30 monitors the time while the error condition occurs. Moreover, the safety-time monitoring circuit 30 is configured to determine whether the cumulative time value reaches or exceeds a respective maximum time threshold. In response to determining that the cumulative time reaches the respective maximum time threshold, the safety-time monitor circuit 30 asserts a respective error signal ERR_{T}. In various embodiments, the error signal ERR_{T} is provided to the fault collection and error management circuit 120, and may thus be used to generate an internal reaction IR and/or an external reaction ER. Additionally or alternatively, the error signal ERR_{T} may be used to generate directly predetermined internal and/or external reactions, i.e., without passing through the fault collection and error management circuit 120.

In various embodiments, the safety-time monitoring circuit 30 may be integrated in the fault collection and error management circuit 120, i.e., the time monitoring function may be implemented within the fault collection and error management circuit 120. Alternatively, the safety-time monitoring circuit 30 may be integrated in the respective safety monitor circuit SM_{TH}, i.e., the time monitoring function may be implemented within the respective safety monitor circuit SM_{TH}, which thus may provide the error signal ERR_{T} (possibly in addition to the error signal(s) ERR_{L1}, ERR_{H1}, ERR_{L2} and/or ERR_{H2}).

Accordingly, in various embodiments, the fault collection and error management circuit 120 may be configured, e.g., via the configuration data IE and/or ETE, to generate one or more internal reaction signals IR and/or external reaction signals ER as a function of the error signal(s) ERR_{T}.

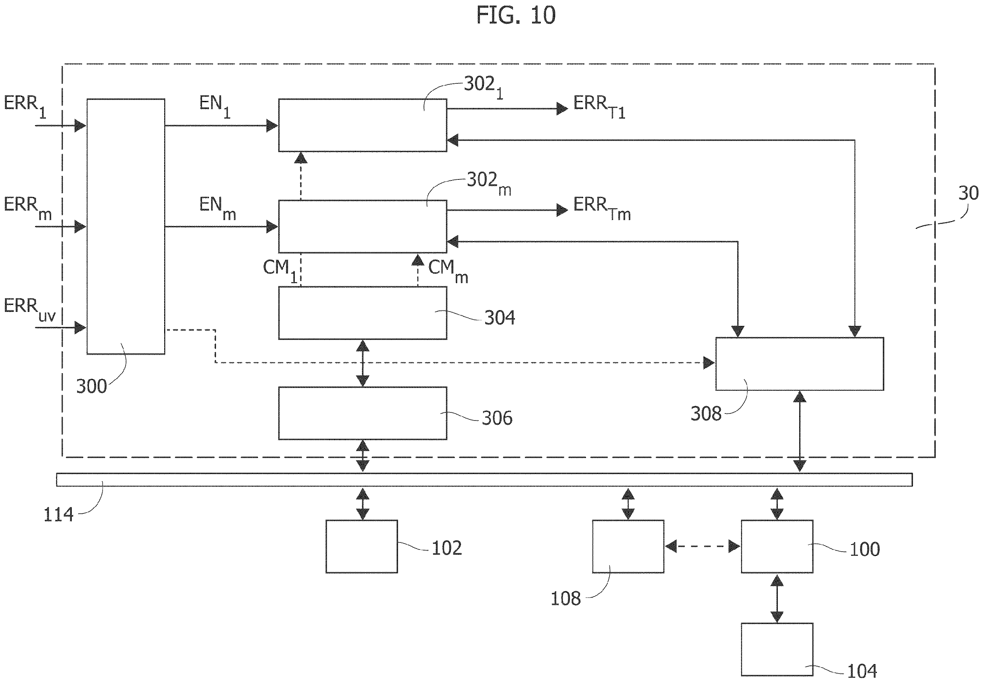

Figure 10 shows an embodiment of the safety-time monitoring circuit 30. Specifically, in the embodiment considered, the safety-time monitoring circuit 30 is configured to receive at least one error signal ERR to be monitored. For example, in the embodiment considered, the safety-time monitoring circuit 30 is configured to receive a number m of error signals ERR₁ to ERRₘ.

In the embodiment considered, the safety-time monitoring circuit 30 comprises for each error signal ERR to be monitored a respective digital hardware counter circuit 302, e.g., counter circuits 302₁ to 302ₘ for m error signals.

In the embodiment considered, the safety-time monitoring circuit 30 is configured to monitor each error signal ERR, and in response to determining that a given error signal ERR is asserted, e.g., is set to high, the safety-time monitoring circuit 30 enables the respective counter circuit 302.

Specifically, in the embodiment considered, the safety-time monitoring circuit 30 comprises for this purpose a state control circuit 300 implementing a Finite-State Machine (FSM). In various embodiments, the state control circuit 300 is implemented with a sequential logic circuit.

For example, in various embodiments, the state control circuit 300 is configured to determine whether a given error signal ERR is asserted. In response to determining that a given error signal ERR is asserted, the state control circuit 300 asserts a respective enable signal EN, which is provided to a respective counter circuit 302. For example, in response to determining that the error signal ERR₁ is asserted, the state control circuit 300 asserts the enable signal EN₁, which is provided to the counter circuit 302₁. Similarly, in response to determining that the error signal ERRₘ is asserted, the state control circuit 300 asserts the enable signal ENₘ, which is provided to the counter circuit 302ₘ.

Conversely, in response to determining that a given error signal ERR is de-asserted, the state control circuit 300 de-asserts the respective enable signal EN, which is provided to the respective counter circuit 302. For example, in response to determining that the error signal ERR₁ is de-asserted, the state control circuit 300 de-asserts the enable signal EN₁, which is provided to the counter circuit 302₁. Similarly, in response to determining that the error signal ERRₘ is de-asserted, the state control circuit 300 de-asserts the enable signal ENₘ, which is provided to the counter circuit 302ₘ.

Accordingly, each counter circuit 302 is configured to increase a respective count value CNT when the counter is enabled, i.e., when the respective enable signal EN is asserted, e.g., is set to high. For example, in response to determining that the enable signal EN₁ is asserted, the counter 302₁ increases a count value CNT₁. Similarly, in response to determining that the enable signal ENₘ is asserted, the counter 302ₘ increases a count value CNTₘ.

Moreover, each counter 302 is configured to compare the respective count value CNT with a respective maximum value CM. In response to determining that the count value CNT reaches or exceeds the maximum count value CM, the counter 302 asserts a respective error signal ERR_{T}. For example, in response to determining that the count value CNT₁ reaches or exceeds the maximum count value CM₁, the counter 302₁ asserts a respective error signal ERR_{T1}. Similarly, in response to determining that the count value CNTₘ reaches or exceeds the maximum count value CMₘ, the counter 302ₘ asserts a respective error signal ERR_{Tm}. In various embodiments, the comparison operation may be implemented within the state control circuit 300, which e.g., may be configured to monitor the count values CNT and periodically compare each count value with the respective maximum value CM.

In various embodiments, the error signals ERR_{T1} to ERR_{Tm} may be provided to the fault collection an error management circuit 120, or the safety-time monitoring circuit 30 may comprise a combinational logic circuit, such as an OR gate, configured to generate a common error signal ERR_{T} by combining the error signals ERR_{T1} to ERR_{Tm}, wherein the combinational logic circuit is configured to assert the common error signal ERR_{T} in response to determining that at least one error signals ERR_{T1} to ERR_{Tm} is asserted, and de-assert the common error signal ERR_{T} in response to determining that all error signals ERR_{T1} to ERR_{Tm} are de-asserted.

In various embodiments, the enable signals EN₁ to ENₘ may directly correspond to the error signals ERR₁ to ERRₘ, whereby the counters 302 increase the respective count value CNT at each clock cycle when the respective error signal ERR is asserted. In this case, the counters 302 should have a larger number of bits, such as 64, 96 or 128 bits. Alternatively, the counters 302 may use a down-scaled clock signal. Alternatively, the down-scaling operation may be implemented within the state control circuit 300, which may be configured to periodically assert a given enable signal EN for a single clock cycle when the respective error signal ERR is asserted.

In various embodiments the maximum values CM are configurable, e.g., programmable. For example, in the embodiment considered, the maximum values CM are provided by one or more configuration registers 304. For example, a configuration register 304 may be programmable by sending write requests to the communication system 114. For example, in various embodiments, the safety-time monitoring circuit 30 may comprise a slave communication interface 306 configured to interface the configuration register(s) with the communication system 114. In general, the slave communication interface 306 may also be external with respect to the safety-time monitoring circuit 30 and may form part of the communication system 114 or may be part of a peripheral bridge.

Accordingly, in various embodiments, a processing core 102 may be configured (via software instructions) to program the maximum values CM stored to the configuration register(s) 304. Additionally or alternatively, the processing system 10a may comprise a hardware configuration circuit 108 configured to read configuration data from a non-volatile memory 104 of the processing system 10a. For example, the configuration circuit 108 may be configured to, in response to a reset of the processing system 10a, read the configuration data from the non-volatile memory 104 and distribute the configuration data within the processing system 10a, e.g., by sending write requests via the communication system 114 or a dedicated communication system. Accordingly, in this way, the maximum values CM may be included in the configuration data stored to the non-volatile memory 104. In various embodiments the maximum values CM may also be fixed and, e.g., hardwired. In various embodiments, in response to a reset, the configuration register(s) 304 may store a default/reset value for each maximum value CM, and the slave interface 306 may be used to receive a new maximum value CM, wherein the maximum value CM may be received from a processing core 102 and/or the configuration circuit 108.

In order to implement cumulative count values, the safety-time monitoring circuit 30 comprises also an integrated DMA interface 308 configured to selectively write the count values CNT to a non-volatile memory 104 of the processing system 10a and selectively read the count values CNT from the non-volatile memory 104 of the processing system 10a. In various embodiments, the non-volatile memory 104 corresponds to a non-volatile memory 104 integrated in the integrated circuit of the processing system 10a, which may also be used to store the configuration data distributed by the configuration circuit 108. Accordingly, in various embodiments, the DMA interface 308 may also be implemented via the hardware configuration circuit 108.

Specifically, in the embodiment considered, the operation of the DMA interface 308 is controlled by the state control circuit 300. Specifically, in response to a reset of the safety-time monitoring circuit 30, e.g., in response to a power-on reset, the state control circuit 300 signals, e.g., via one or more control signals, a read request indicating that the DMA interface 308 should read the count values CNT from the non-volatile memory 104. Accordingly, in response to the read request, the DMA interface 308 reads the count values form the non-volatile memory 104 and provides to count values to the counters 302. For example, the count values CNT may be stored to predetermined memory locations in the non-volatile memory 104. In various embodiments, the DMA interface 308 may directly communicate with the memory controller 100 interfacing the non-volatile memory 104 or the DMA interface may be a master interface of the communication system 114 configured to read the count values from the non-volatile memory 104 by sending read requests to the communication system 114.

In various embodiments, each count value may be stored to one or more memory locations of the non-volatile memory 104. Accordingly, the DMA interface 308 may autonomously generate the read requests in order to read the count values sequentially from the non-volatile 104, e.g., by sequentially increases an address signal from an initial value indicating the first memory location in the non-volatile memory 104 used to store the count values CNT.

In a complementary manner, in response to given events, the state control circuit 300 signals, e.g., via one or more control signals, a write request indicating that the DMA interface 308 should write the count values CNT to the non-volatile memory 104. Accordingly, in response to the write request, the DMA interface 308 obtains the count values CNT from the counters 302 and writes the count values CNT to the non-volatile memory 104. Also in this case, the DMA interface 308 may be a master interface of the communication system 114, which e.g., sequentially increases an address signal from an initial value indicating the first memory location in the non-volatile memory 104 used to store the count values CNT.

Those of skill in the art will appreciate that a write operation to a non-volatile memory is usually a more complex operation, which may require a state-machine able to execute all the necessary steps rather than just a single DMA transfer. For example, first the interface 308 may program some bits of a control register of the memory controller 100 managing the non-volatile memory 104 in order to enable the write operation to the non-volatile memory 104. Next, the interface 308 may send the data to be written, e.g., on a write bus, and confirm the write operation by programming some bits of the control register of the memory controller 100. Finally, the interface 308 may (e.g., periodically) read some bits of the control register of the memory controller 100 in order to determine whether the write operation was successful. Thus, in various embodiments, each write operation to the non-volatile memory 104 may indeed comprise a plurality of write and read operations transmitted via the communication system 114 (or a dedicated communication system). Accordingly, in various embodiments, the DMA interface 308 may comprise a state-machine or have associated a state-machine, e.g., the state control circuit 300, configured to manage a write operation to the non-volatile memory 104 by executing via the DMA interface 308 a sequence of write and read operations, which are exchanged with the memory controller 100.

Similarly, in response to a reset of the processing system 10a, the configuration circuit 108 may already transfer the count values from the non-volatile memory 104 to the safety-time monitor circuit 30, and the state control may signal to the configuration circuit 108 that the count values should be transferred from the safety-time monitor circuit 30 to the non-volatile memory 104. However, usually it is preferably to use an integrated DMA interface 308, because in this way, the safety-time monitor circuit 30 may be provided as an additional hardware module (IP core), which optionally may be added to a processing system.

In various embodiments, the state control circuit 300 signals the write request periodically and/or in response to detecting a shut-down of the processing system 10a. For example, in order to detect a shut-down of the processing system 10a, the state control circuit 300 may monitor an error signal ERR_{UV} provided by a safety monitor circuit SM_{TH} configured to monitor the supply voltage VDD of the processing system 10a. For example, the error signal ERR_{UV} may correspond to the error signal ERR_{L1} of the safety monitor circuit SM_{TH} configured to monitor the supply voltage VDD, wherein the error signal ERR_{UV}/ERR_{L1} is asserted when the voltage VDD falls below the lower threshold TH_{L1} (see the description of Figure 8). Conversely, in order to generate periodically the write request, the state control circuit 300 may comprise or have associated a further hardware digital counter (not shown in the figures). In various embodiments, the time interval for the periodic write operation may be configurable, e.g., by programming the configuration register 304 (via the processing core 102 and/or the configuration circuit 108).

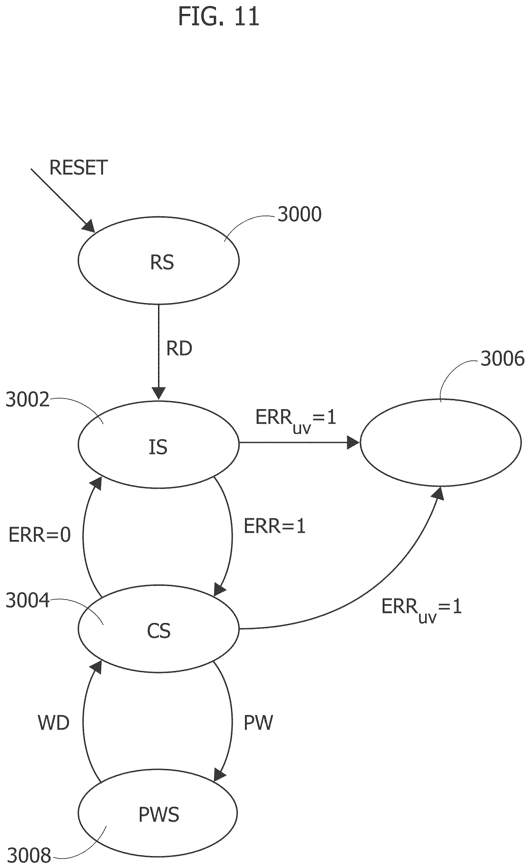

Figure 11 shows a state diagram of an embodiment of the operation of the state control circuit 300. Specifically, in response to a reset RESET, the state control circuit 300 proceeds to an initialization or read state (RS) 3000. Specifically, in the state 3000, the state control circuit 300 signals the read request to the DMA interface 308, and waits in the state 3000 until the DMA interface 308 signals the completion of the read request. For example, in various embodiments, the DMA interface asserts a read-done signal RD once the count values CNT have been transferred from the non-volatile memory 104 to the counters 302.

In the embodiment considered, in response to the completion of the read request, e.g., in response to determining that the read-done signal RD is asserted, the state control circuit 300 proceeds to a wait or idle state (IS) 3002. Specifically, the state control circuit 300 remains in the idle state 3002 until an error signal ERR is asserted, e.g., an error signal ERR is set to '1'.

In the embodiment considered, in response to determining that an error signal ERR is asserted, the state control circuit 300 proceeds to a count state (CS) 3004. Specifically, in the count state 3004, the counter 302 associated with the asserted error signal ERR increases its count value CNT. As mentioned before, the state control circuit 300 may be configured to assert the enable signal for the counter(s) associated with an asserted error signal ERR. Thus, in case a plurality of error signals ERR are asserted, the respective counters 302 increase their count values. As mentioned before, a counter 302 may increase the respective count value CNT at each clock cycle or periodically, e.g., in response to a down-scaled clock signal or by periodically asserting the respective enable signal EN.

In the embodiment considered, the state control circuit 300 remains in the count state 3004 until the error signal ERR is again de-asserted (or all error signals ERR are again de-asserted). In this case, the state control circuit 300 returns to the idle state 3002.

Thus, the states 3000, 3002 and 3004 are used to load the previous count values CNT from the non-volatile memory 104 and increase the count values CNT in response to the error signals ERR.

In Figure 11 are also shown two further steps, which may be used separately or in combinations. Specifically, a write state (WS) 3006 is used to write the count values to the non-volatile memory 104 in response to a power-down of the processing system 10a. For example, in the embodiment considered, the state control circuit 300 is configured to proceed to this state from the idle state 3002 and the count state 3004 in response to determining that the error signal ERR_{UV} is asserted, e.g., when the error signal ERR_{UV} is set to '1'. Specifically, in the state 3006, the state control circuit 300 signals the write request to the DMA interface 308.

Conversely, a periodic write state (PWS) 3008 is used to implement the period write function. For example, in the count state 3004, the state control circuit 300 may enable a further counter, which is configured to periodically signal a time-out condition, e.g., by asserting a signal PW. Thus, in response to determining that the time-out condition is signaled, e.g., in response to the signal PW, the state control circuit 300 proceeds to the periodic write state 3008. Specifically, in the state 3008, the state control circuit 300 signals the write request to the DMA interface 308, and waits in the state 3008 until the DMA interface 308 signals the completion of the write request. For example, in various embodiments, the DMA interface asserts a write-done signal WD once the count values CNT have been transferred from the counters 3002 to the non-volatile memory 104.

Accordingly, in response to the completion of the write request, e.g., in response to the write-done signal WD, the state control circuit 300 may return to the count state 3004.

Thus, the states 3006 and/or 3008 are used to update the count values CNT also in the non-volatile memory 104. In this respect, the write state 3006 may transfer all count values CNT from the counters 302 to the non-volatile memory 104. Conversely, the write state 3008 may transfer all count values CNT or just a sub-set of count values CNT from the counters 302 to the non-volatile memory 104. For example, in various embodiments, the state machine 300 is configured to signal in the state 3008 that just the count values CNT associated with asserted error signals ERR should be transferred from the respective counter 300 to the non-volatile memory 104.

In various embodiments, the state control circuit 300 may also comprise for each counter 302 a respective archive flag. Specifically, in response to increasing its count value CNT, a counter 302 may assert the respective archive flag in order to indicate that the count value CNT has changed. Thus, the state control circuit 300 or directly the DMA interface 308 may determine which archive flags are asserted and just transfer the respective count values CNT from the counters 302 to the non-volatile memory 104. Moreover, the state control circuit 300 or directly the DMA interface 308 may again de-assert the archive flag. For example, this permits to update just the count values CNT in the non-volatile memory 104, which also changed.

As mentioned before, the generation of the error signals ERR_{T1} to ERR_{Tm} or the cumulative error signal ERR_{T} may be managed by the counters 302 and/or the state control circuit 300. For example, the state control circuit 300 may be configured to compare each count value CNT with the respective maximum value CM in the state 3000 (i.e., once having loaded the respective previous count value from the non-volatile memory) and in the state 3008, i.e., when the count values are updated in the nonvolatile memory 104.

For example, the safety-time monitor circuit 30 described in the foregoing, may be used to monitor the supply voltage of the processing system 10a. Specifically, in this case, the processing system 10a comprises a safety monitor circuit SM_{TH}, where the measurement signal MS is indicative of (e.g., proportional to) the supply voltage VDD of the processing system 10a.

As mentioned before, this safety monitor circuit SM_{TH} generates at least the signal ERR_{UV}, which signals the undervoltage condition, e.g., the error signal ERR_{UV} may correspond to the error signal ERR_{L1} generated via the comparator 202. Moreover, when monitoring the supply voltage VDD, the safety monitor circuit SM_{TH} generates at least one error signals ERR signaling an over-voltage condition to be monitored. For example, in various embodiments, the SM_{TH} comprises the comparator 200 configured to generate the error signal ERR_{H1} and the comparator 204 configured to generate the error signal ERR_{H2}. While Figure 8 shows that these comparators 200, 202 and 204 belong to the same safety monitor circuit SM_{TH}, indeed the comparators may be distributed amongst a plurality of safety monitor circuits SM_{TH}.

For example, as mentioned before, the safety-time monitor circuit 30 may be configured to determine whether the error signal ERR_{H1} was asserted for more than 10 hours and/or whether the error signal ERR_{H2} was asserted for more than 60 seconds. In addition, the error signals ERR_{H1} and/or ERR_{H2} may be provide to the fault collection and error management circuit 120, which may be used to generate an internal reaction signal IR and/or an external reaction signal ER in order to take suitable corrective actions.

Specifically, in various embodiments, in response to detecting that the error signal ERR_{H1} is asserted, the safety-time monitor circuit 30 increases a first counter 302, e.g., the counter 302₁, and in response to detecting that the error signal ERR_{H2} is asserted, the safety-time monitor circuit 30 increases a second counter 302, e.g., the counter 302₂. Accordingly, these counters track the cumulative duration of the error conditions, providing a basis for further actions if the anomaly persists. In this respect, in various embodiments, the values of the counters 302₁ and 302₂ are periodically saved in the non-volatile memory 104, while the safety monitor circuit(s) SM_{TH} continues to signal the error condition. This storage ensures that the system retains a record of error durations even if it undergoes a reset or power interruption.

The respective counting process is stopped automatically once the voltage supply VDD returns below the respective threshold. This mechanism ensures that the respective counter 302 only reflects the active duration of the error condition.

If the cumulative duration of the error condition reaches a critical limit, the safety-time monitor circuit 30 asserts a respective error signal ERR_{T1} or ERR_{T2}. For example, the error signal ERR_{T1} is asserted when the error condition persists for a total of 10 hours, and the error signal ERR_{T2} is asserted when the error condition persists for a total of 60 seconds. This alarm serves as a critical notification, alerting the system or operator to the sustained nature of the voltage anomaly and potentially initiating further corrective measures. For example, for this purpose, also the error signals ERR_{T1} and ERR_{T2} may be provided to the fault collection an error management circuit 120 which may be configured to generate an internal reaction signal IR and/or an external reaction signal ER as a function of the error signals ERR_{T1} and ERR_{T2}.

Thus, the solutions disclosed herein provide several advantages when compared to software-based solutions. Unlike software-based solutions that may require a dedicated CPU to monitor and manage error conditions, the proposed solutions eliminate the need for such additional hardware. This reduces the overall silicon area required, minimizes power consumption, and lowers production costs. Additionally, this simplification removes the complexity of integrating a separate CPU into the system.

The proposed solutions offer superior performance in terms of both timing precision and reliability compared to software implementations. In fact, hardware-based solutions inherently operate faster than software due to reduced latency in signal processing and decision-making. Furthermore, hardware is less susceptible to performance degradation caused by software-related issues such as task prioritization, resource contention, or operating conditions at the edge of functional guarantees.

The proposed solutions significantly reduce the complexity of the software architecture required for the application. By offloading monitoring and error-handling functions to the hardware, the software can focus on higher-level functionalities without the need to manage low-level details. This simplifies development, testing, and maintenance, resulting in faster development cycles and fewer bugs. In this respect, in the proposed solutions, the user only needs to configure the fault collection and error management circuit 120 and the safety-time monitor circuit 30. This streamlined configuration process is more intuitive and less error-prone compared to the intricate setup and integration required for software-based monitors.

However, the proposed solutions offer high flexibility. For example, as mentioned before, the generation of the internal and/or external reaction signals via the fault collection and error management circuit 120 may be programmable. However, also the routing of (at least part of) the error signals ERR to the safety-time monitor circuit 30 may be programmable. This enables tailored solutions that can adapt to different use cases or system requirements without the need for extensive reengineering. For example, the proposed solutions may provide the ability to define which error signals ERR from the safety monitor circuits SM are monitored. This level of customization allows the integrator to optimize the system for specific applications or conditions without modifying the underlying hardware or software.

For example, the fault collection and error management circuit 120 may be configured to generate a first interrupt IRQ of a microprocessor 1020 in response to the original error signal ERR. In response to the first interrupt IRQ, the microprocessor 1020 may execute software instructions in order to change the operation of the processing system 10a in order to avoid the error condition associated with the error signal ERR.

Similarly, the fault collection and error management circuit 120 may be configured to generate a second interrupt IRQ of the microprocessor 1020 in response to the associated error signal ERR_{T}, e.g., in order to activate a safe-state operating mode of the software executed by the processing system. Additionally or alternatively, the fault collection and error management circuit 120 may be configured to assert an external reaction signal ET, in order to signal the critical situation to some external hardware, which can react and put the system in a safe or degraded state, which e.g., permits that the vehicle may reach a repair center.

Of course, without prejudice to the principle of the invention, the details of construction and the embodiments may vary widely with respect to what has been described and illustrated herein purely by way of example, without thereby departing from the scope of the present invention, as defined by the ensuing claims.

## Claims

1. A processing system (10a) comprising:
- a non-volatile memory (104) configured to store a count value;
- a safety monitor circuit (SM; SM_{TH}) configured to generate an error signal (ERR) by monitoring the operation of said processing system (10a);
- a hardware safety-time monitor circuit (30) configured to generate a further error signal (ERR_{T}) as a function of said error signal (ERR);
- a fault collection and error management circuit (120) configured to generate one or more reaction signals (RST, IRQ, ET, SET) as a function of said further error signal (ERR_{T});
wherein said hardware safety-time monitor circuit (30) comprises a counter (302) configured to selectively increase a count value, wherein said hardware safety-time monitor circuit (30) is configured to:
- in response to switching on (RESET) said processing system (10a), transfer (3000) said stored count value from said non-volatile memory (104) to said counter (302),
- determine (3002) whether said error signal (ERR) is asserted,
- in response to determining that said error signal (ERR) is asserted, increase (3004) via said counter (302) said count value,
- determine whether said count value reaches or exceeds a maximum value (CM),
- in response to determining that said count value reaches or exceeds said maximum value (CM), assert said further error signal (ERR_{T}), and
- in response to determining a switching off (ERR_{UV}) of said processing system and/or periodically (PW), transfer (3006; 3008) said count value from said counter (302) to said non-volatile memory (104), whereby said count value is a cumulative count value.

2. The processing system according to Claim 1, comprising a comparator (202) configured to:
- determine whether a supply voltage of said processing system (10a) is smaller than a lower threshold (TH_{L1}), and
- in response to determining that said supply voltage of said processing system (10a) is smaller than said lower threshold (TH_{L1}), assert an under-voltage error signal (ERR_{L1});
and wherein said hardware safety-time monitor circuit (30) is configured to determine a switching off (ERR_{UV}) of said processing system by determining whether said under-voltage error signal (ERR_{L1}) is asserted.

3. The processing system according to Claim 1 or Claim 2, wherein said safety monitor circuit (SM_{TH}) is configured to generate said error signal (ERR) by determining whether a measurement signal (MS) indicative of a supply voltage or temperature of said processing system (10a) exceeds a given threshold (TH_{H1}; TH_{H2}).

4. The processing system according to Claim 3, wherein said safety monitor circuit (SM_{TH}) comprises a first comparator (200) configured to assert a first error signal (ERR_{H1}) in response to determining that said measurement signal (MS) exceeds a first threshold (TH_{H1}) and a second comparator (204) configured to assert a second error signal (ERR_{H2}) in response to determining that said measurement signal (MS) exceeds a second threshold (TH_{H2}), wherein said hardware safety-time monitor circuit (30) comprises a first counter (302₁) configured to selectively increase a first count value and a second counter (302₂) configured to selectively increase a second count value, and wherein said hardware safety-time monitor circuit (30) is configured to:
- in response to determining that said first error signal (ERR_{H1}) is asserted, increase (3004) via said first counter (302₁) said first count value,
- determine whether said first count value reaches or exceeds a first maximum value (CM₁),
- in response to determining that said first count value reaches or exceeds said first maximum value (CM₁), assert a first further error signal (ERR_{T1}),
- in response to determining that said second error signal (ERR_{H2}) is asserted, increase (3004) via said second counter (302₂) said second count value,
- determine whether said second count value reaches or exceeds a second maximum value (CM₂), and
- in response to determining that said second count value reaches or exceeds said second maximum value (CM₂), assert a second further error signal (ERR_{T2}), wherein said fault collection and error management circuit (120) is configured to generate said one or more reaction signals (RST, IRQ, ET, SET) as a function of said first further error signal (ERR_{T1}) and said second further error signal (ERR_{T2}).

5. The processing system according to any of the previous claims, comprising:
- a microprocessor (1020);
- a memory controller (100) configured to interface said non-volatile memory (104); and
- a communication system (114) connecting said memory controller (100) to said microprocessor (1020).

6. The processing system according to Claim 5, wherein said hardware safety-time monitor circuit (30) comprises:
- one or more configuration registers (304) configured to store said maximum value (CM), and
- a slave communication interface (306) configured to program said one or more configuration registers (304) in response to receiving a write request from said communication system (114).

7. The processing system according to Claim 5 or Claim 6, comprising a DMA interface (308; 110) configured to transfer (3000) said stored count value from said non-volatile memory (104) to said counter (302), and said count value from said counter (302) to said non-volatile memory (104).

8. The processing system according to Claim 7, wherein said DMA interface (308; 110) is a master communication interface (308) configured to:
- transfer (3000) said stored count value from said non-volatile memory (104) to said counter (302) by sending read requests to said communication system (114), and
- transfer (3006; 3008) said count value from said counter (302) to said non-volatile memory (104) by sending write requests to said communication system (114).

9. The processing system according to any of the previous claims, wherein said fault collection and error management circuit (120) is configured to receive said error signal (ERR) and generate one or more reaction signals (RST, IRQ, ET, SET) as a function of said error signal (ERR).

10. The processing system according to Claims 5 and 9,
wherein said fault collection and error management circuit (120) is configured to generate an interrupt (IRQ) of said microprocessor (1020) in response to said error signal (ERR), wherein said microprocessor (1020) is configured to, in response to said interrupt (IRQ), execute software instructions in order to change the operation of said processing system (10a) in order to avoid an error condition associated with said error signal (ERR); and
wherein said fault collection and error management circuit (120) is configured to, in response to said further error signal (ERR_{T}), generate a reaction signal used to place said processing system (10a) in a safe state.

11. The processing system (10a) according to any of the previous claims, integrated in an integrated circuit.

12. A device, such as a vehicle, comprising a plurality of processing systems (10a) according to any of the previous claims, wherein said processing systems (10a) are connected via a further communication system (20).

13. A method of operating a processing system (10a) according to any of the previous Claims 1 to 10, comprising the steps of:
- switching on (RESET) said processing system (10a), whereby said hardware safety-time monitor circuit (30) transfers (3000) said stored count value from said non-volatile memory (104) to said counter (302);
- asserting via said safety monitor circuit (SM; SM_{TH}) said error signal (ERR), whereby said hardware safety-time monitor circuit (30):
- increases (3004) via said counter (302) said count value,
- determines whether said count value reaches or exceeds a maximum value (CM), and
- in response to determining that said count value reaches or exceeds said maximum value (CM), asserts said further error signal (ERR_{T});
- in response to a switching off (ERR_{UV}) of said processing system and/or periodically (PW), transferring (3006; 3008) via said hardware safety-time monitor circuit (30) said count value from said counter (302) to said non-volatile memory (104), whereby said count value is a cumulative count value.
